# EUROPEAN PATENT APPLICATION

(11) **EP 3 934 315 A1**
(43) Date of publication of application: **05.01.2022**
(21) Application number: 19918013.4
(22) Date of filing: 01.03.2019
(51) Int. Cl.: H04W 28/04, H04W 16/32, H04W 72/04

(54) **WIRELESS COMMUNICATION SYSTEM**

(71) Applicant: MITSUBISHI ELECTRIC CORPORATION, Chiyoda-ku Tokyo 100-8310 (JP)
(72) Inventor: UCHINO, Daichi, Tokyo 100-8310 (JP); SHIMODA, Tadahiro, Tokyo 100-8310 (JP); MOCHIZUKI, Mitsuru, Tokyo 100-8310 (JP); FUKUI, Noriyuki, Tokyo 100-8310 (JP)
(74) Representative: Pfenning, Meinig & Partner mbB
(86) International application number: PCT/JP2019/008195
(87) International publication number: WO 2020/178918

(57) **Abstract**

A wireless communication system (1) includes a mobile terminal (101), multiple lower-layer base stations (401-403) communicating with the mobile terminal (101), and an upper-layer base station (404) controlling the lower-layer base stations. The upper-layer base station (404) transmits, to the lower-layer base stations (401-403), multiple pieces of first data generated by duplication by the upper-layer base station (404), and the lower-layer base stations (401-403) transmit the first data to the mobile terminal. The mobile terminal (101) includes link control units receiving the respective first data correspondingly to the respective lower-layer base stations (401-403); and a data control unit that, when a first link control unit of the link control units receives the first data from a first lower-layer base station of the lower-layer base stations, transmits a retransmission request stop message to a second link control unit that hasn't received the first data from a second lower-layer base station being a lower-layer base station other than the first lower-layer base station. The retransmission request stop message is a message that causes stopping of a request for retransmission of the first data.

## Description

### Field

The present invention relates to a wireless communication system in which a base station duplicates a packet, and transmits a resulting packet to a mobile terminal.

### Background

The amount of mobile network traffic is in an increasing trend, and the communication speed is also increasing. The communication speed in a mobile network is expected to further increase with a start of full-scale operation of long term evolution (LTE) and long term evolution advanced (LTE-A). In addition, to address more complex mobile networks, a fifth generation wireless access system is under consideration aiming at starting its services in 2020 or later. A fifth generation wireless access system is also called a 5th generation (5G) system.

A 5G system is required to achieve further reduction of power consumption and further reduction of device cost with a system capacity of 1000 times greater, a data transmission speed of 100 times higher, a data processing delay of one-tenth lower, and the number of simultaneous connections of communication terminals of 100 times greater, than those of an LTE system.

To meet such demand, 3rd Generation Partnership Project (3GPP) is working on the development of a 5G standard as Release 15. The technology of 5G for a radio section is called New Radio Access Technology (NR), including some new technologies being under consideration. Non-Patent Literature 1 describes a packet duplication method using a dual connectivity (DC) technology, in which user equipment (UE) connects to two eNodeBs (eNBs) for communication, or using a multi-connectivity (MC) technology; and an NR in which a next generation NodeB (gNB) is split into a central unit (CU) and multiple distributed units (DUs). Specifically, the DC technology is specified in a 3GPP NR standard, and allows a secondary node in a New Radio Access Network (RAN) to use an additional resource. Specifically, the MC technology is specified in a 3GPP NR standard, and is an Evolved Universal Terrestrial Radio Access Network (E-UTRAN) provided by multiple different schedulers or a radio resource backhaul between NRs. A CU controls multiple DUs, and performs, for example, control on processing of data transmission and reception in each DU. In other words, the MC technology and the DC technology are each a technology including a mobile terminal, multiple lower-layer base stations that communicate with the mobile terminal, and an upper-layer base station that controls the multiple lower-layer base stations, where the upper-layer base station transmits multiple sets of data generated by duplication by the upper-layer base station to the multiple lower-layer base stations, and the multiple lower-layer base stations each transmit the data to the mobile terminal.

### Citation List

### Non-Patent Literature

Non-Patent Literature 1: 3GPP R2-1700672

### Summary

### Technical Problem

However, the foregoing conventional technology uses, in NR, a packet duplication method that transmits and receives the same packet in each gNB using the DC technology or the MC technology. This presents a problem in that use of the packet duplication method causes the radio resource consumption to increase as the number of duplications increases. The term "radio resource" herein refers to resources used in wireless communication, specifically, the frequency and the communication time period used in wireless communication.

The present invention has been made in view of the foregoing, and it is an object of the present invention to provide a wireless communication system in which a base station duplicates a packet, and transmits a resulting packet to a mobile terminal, and that is capable of improving usage efficiency of radio resources.

### Solution to Problem

In order to solve the above problem and achieve the object, a wireless communication system including: a mobile terminal; a plurality of lower-layer base stations to communicate with the mobile terminal; and an upper-layer base station to control the plurality of lower-layer base stations, the upper-layer base station transmitting, to the plurality of lower-layer base stations, a plurality of pieces of first data generated by duplication by the upper-layer base station, the plurality of lower-layer base stations transmitting the respective pieces of first data to the mobile terminal. The mobile terminal includes a plurality of link control units to receive the respective pieces of first data correspondingly to the respective lower-layer base stations, and a data control unit to, when a first link control unit of the plurality of link control units receives the first data from a first lower-layer base station of the plurality of lower-layer base stations, transmit a retransmission request stop message to a second link control unit that does not receive the first data from a second lower-layer base station being a lower-layer base station other than the first lower-layer base station, the retransmission request stop message being a message that causes stopping of a request for retransmission of the first data.

### Advantageous Effects of Invention

A wireless communication system according to the present invention, in which a base station duplicates a packet, and transmits a resulting packet to a mobile terminal, provides an advantage in being capable of improving usage efficiency of radio resources.

### Brief Description of Drawings

FIG. 1 is a block diagram illustrating a configuration of a wireless communication system according to a first embodiment.
FIG. 2 is a block diagram illustrating a configuration of a mobile terminal according to the first embodiment.
FIG. 3 is a block diagram illustrating a configuration of a base station according to the first embodiment.
FIG. 4 is a diagram illustrating the control circuit according to the first embodiment.
FIG. 5 is a diagram illustrating a communication environment in which the base station according to the first embodiment is split into two units.
FIG. 6 is a sequence diagram illustrating a flow of data in the wireless communication system according to the first embodiment.
FIG. 7 is a diagram illustrating a wireless communication system according to a second embodiment.
FIG. 8 is a sequence diagram illustrating a flow of data in the wireless communication system according to the second embodiment.

### Description of Embodiments

A wireless communication system according to embodiments of the present invention will be described in detail below with reference to the drawings. Note that these embodiments are not intended to limit the scope of this invention.

### First Embodiment.

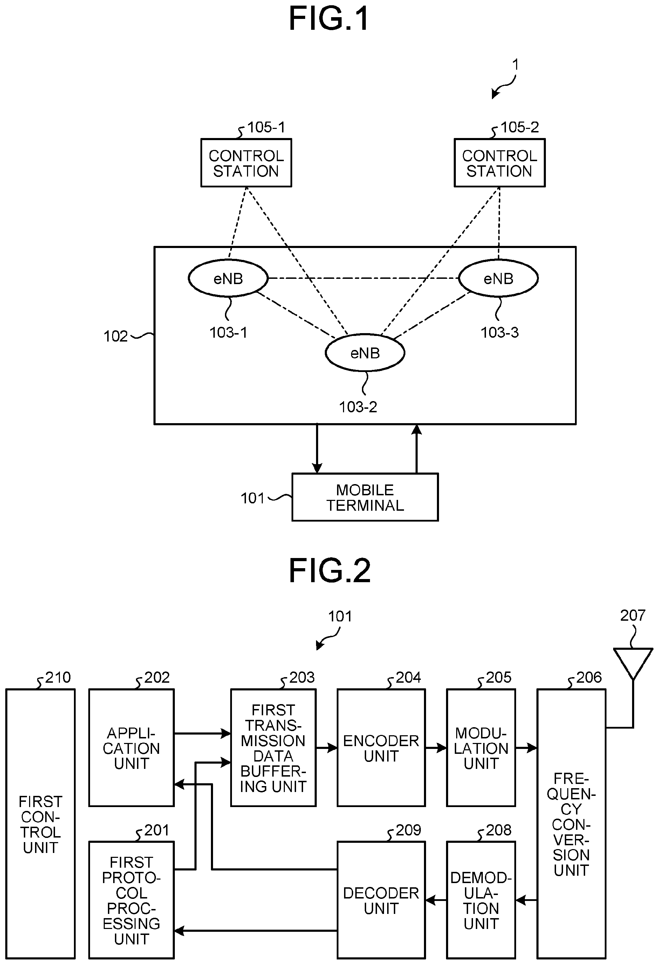

FIG. 1 is a block diagram illustrating a configuration of a wireless communication system according to a first embodiment. A wireless communication system 1 includes a mobile terminal 101, a base station 102, and control stations 105-1 and 105-2. When no distinction needs to be made, the control stations 105-1 and 105-2 are referred to as control station 105. The mobile terminal 101 has functionality as a UE. The mobile terminal 101 and the base station 102 transmit and receive data to and from each other using an NR communication protocol. The control station 105 has functionality as a Mobility Management Entity (MME) or a Serving Gateway (S-GW). An MME is a logical node that provides mobility control, specified in a 3GPP LTE-A standard. An S-GW is a packet gateway including a 3GPP access system, specified in a 3GPP LTE-A standard.

The mobile terminal 101 and the base station 102 can wirelessly communicate with each other, and transmit and receive a signal to and from each other using wireless communication. The mobile terminal 101 includes not only a mobile cellular phone terminal device, but also a sensor device. Examples of a control protocol applied to the mobile terminal 101 include a packet data convergence protocol (PDCP) layer, a radio link control (RLC) layer, a medium access control (MAC) layer, and a physical layer (PHY layer). Hereinafter, the PDCP layer will be referred to simply as PDCP; the RLC layer, as RLC; the PHY layer, as PHY; and the MAC layer, as MAC. PDCP and RLC are protocols specified in a 3GPP NR standard. PDCP provides packet data encryption. RLC provides control of radio link.

The base station 102 includes eNBs 103-1 to 103-3. When no distinction needs to be made, the eNBs 103-1 to 103-3 are referred to as eNB 103. The eNB 103 and the control station 105 communicate with each other using an S1 interface specified in a 3GPP LTE standard, and control information is transmitted and received between the eNB 103 and the control station 105. Although FIG. 1 illustrates each of the eNBs 103 being connected to one of the control stations 105, each of the eNBs 103 may be connected to multiple ones of the control stations 105. The eNBs 103 communicate with each other using an X2 interface specified in a 3GPP LTE standard, and control information is also transmitted and received between the eNBs 103. The control station 105 controls the eNB 103 and the mobile terminals 101. The control station 105 constitutes an Evolved Packet Core (EPC) network, which is a core network. The base station 102 constitutes an E-UTRAN. The EPC and the E-UTRAN may be referred to collectively as network.

The base station 102 may serve a single cell or may serve multiple cells. A cell is a communication range of that base station 102. Each cell has a coverage, which refers to the communicable range with the mobile terminal 101. The base station 102 wirelessly communicates with the mobile terminal 101 within the coverage. In a case in which the base station 102 serves multiple cells, the base station 102 can communicate with the mobile terminal 101 within each of the cells.

FIG. 2 is a block diagram illustrating a configuration of the mobile terminal 101 according to the first embodiment. The mobile terminal 101 includes a first protocol processing unit 201, an application unit 202, a first transmission data buffering unit 203, an encoder unit 204, a modulation unit 205, a frequency conversion unit 206, an antenna 207, a demodulation unit 208, a decoder unit 209, and a first control unit 210.

An operation of the mobile terminal 101 of transmitting a signal to the base station 102 will now be described. The first protocol processing unit 201 generates control data, and outputs the control data to the first transmission data buffering unit 203. The term "control data" refers to data used for communication control. Specifically, control data used in downlink communication from the base station 102 to the mobile terminal 101 is physical downlink control channel (PDCCH) data. Control data used in uplink communication from the mobile terminal 101 to the base station 102 is physical uplink control channel (PUCCH) data. The application unit 202 generates user data, and outputs the user data to the first transmission data buffering unit 203. The term "user data" refers to the actual content of communication, and refers to data necessary for the user of the mobile terminal 101. Specifically, user data used in downlink communication is physical downlink shared channel (PDSCH) data, and user data used in uplink communication is physical uplink shared channel (PUSCH) data. The first transmission data buffering unit 203 stores the control data and the user data. In addition, the first transmission data buffering unit 203 outputs the control data and the user data to the encoder unit 204. The encoder unit 204 performs encoding, such as error correction, on the control data and on the user data. The encoder unit 204 outputs the encoded data to the modulation unit 205. Note that there may be data directly output from the first transmission data buffering unit 203 to the modulation unit 205 without being encoded by the encoder unit 204. The modulation unit 205 modulates the encoded data. The frequency conversion unit 206 converts the modulated data into a baseband signal. In addition, the frequency conversion unit 206 converts the baseband signal into a signal at a radio frequency, and outputs the signal to the antenna 207. The antenna 207 transmits the signal at a radio frequency to the base station 102 as a transmission signal.

An operation of the mobile terminal 101 of receiving a signal from the base station 102 will next be described. The antenna 207 receives a wireless signal from the base station 102. The frequency conversion unit 206 converts the reception signal at a radio frequency into a baseband signal, and outputs the baseband signal to the demodulation unit 208. The demodulation unit 208 demodulates the baseband signal, and outputs the demodulated signal to the decoder unit 209. The decoder unit 209 performs decoding, such as error correction, on the demodulated data. The decoder unit 209 outputs, of the decoded data, the control data to the first protocol processing unit 201, and the user data to the application unit 202. The operation of the mobile terminal 101 of transmitting and receiving a signal is controlled by the first control unit 210. Thus, although illustration is omitted in FIG. 2, the first control unit 210 is connected to each of the functional units other than the antenna 207.

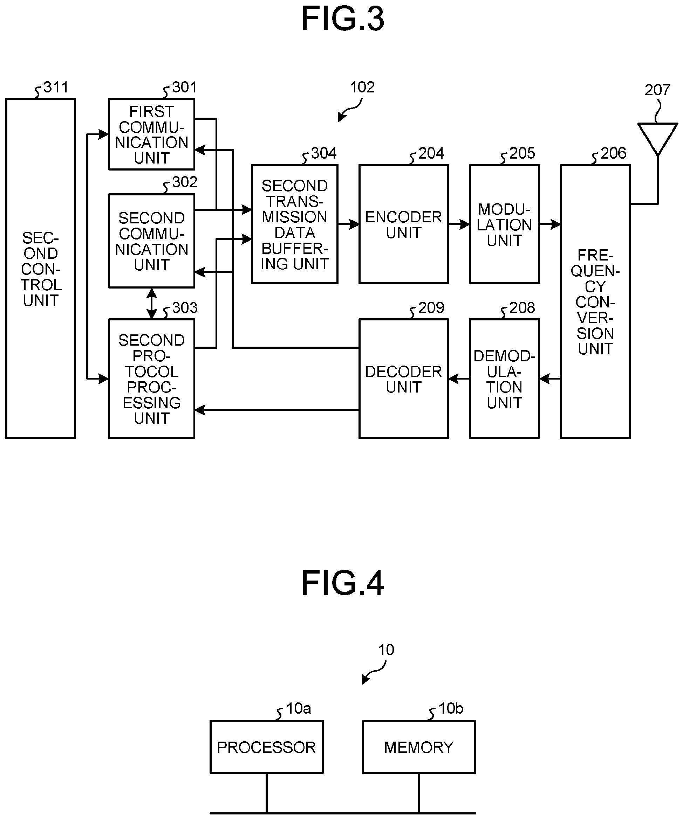

FIG. 3 is a block diagram illustrating a configuration of the base station 102 according to the first embodiment. The base station 102 includes a first communication unit 301, a second communication unit 302, a second protocol processing unit 303, a second transmission data buffering unit 304, the encoder unit 204, the modulation unit 205, the frequency conversion unit 206, the antenna 207, the demodulation unit 208, the decoder unit 209, and a second control unit 311.

An operation of the base station 102 of transmitting a signal to the mobile terminal 101 will next be described. The first communication unit 301 transmits and receives data to and from the control station 105. The second communication unit 302 transmits and receives data to and from another base station. The first communication unit 301 and the second communication unit 302 each provide and receive information to and from the second protocol processing unit 303. The second transmission data buffering unit 304 stores control data from the second protocol processing unit 303, and user data and control data from the first communication unit 301 and from the second communication unit 302. In addition, the second transmission data buffering unit 304 outputs these pieces of data to the encoder unit 204.

The encoder unit 204 performs encoding, such as error correction, on the data input. Note that there may be data directly output from the second transmission data buffering unit 304 to the modulation unit 205 without being encoded by the encoder unit 204. The modulation unit 205 modulates the encoded data. The frequency conversion unit 206 converts the modulated data into a baseband signal, and then converts the baseband signal into a signal at a radio frequency. The antenna 207 transmits the signal at a radio frequency to one or multiple mobile terminals 101.

An operation of the base station 102 of receiving a signal from the mobile terminal 101 will next be described. The antenna 207 receives a wireless signal from the mobile terminal 101. The frequency conversion unit 206 converts the reception signal, i.e., the wireless signal received, at a radio frequency into a baseband signal, and outputs the baseband signal to the demodulation unit 208. The demodulation unit 208 demodulates the baseband signal, and outputs the demodulated signal to the decoder unit 209. The decoder unit 209 performs decoding, such as error correction, on the demodulated data. Of the decoded data, the control data is transferred to the second protocol processing unit 303, to the first communication unit 301, or to the second communication unit 302. Of the decoded data, the user data is transferred to the first communication unit 301 or to the second communication unit 302. The sequence of operation of the base station 102 is controlled by the second control unit 311. Thus, although illustration is omitted in FIG. 3, the second control unit 311 is connected to each of the functional units other than the antenna 207.

The first protocol processing unit 201, the application unit 202, the first transmission data buffering unit 203, the encoder unit 204, the modulation unit 205, the frequency conversion unit 206, the antenna 207, the demodulation unit 208, the decoder unit 209, the first control unit 210, the first communication unit 301, the second communication unit 302, the second protocol processing unit 303, the second transmission data buffering unit 304, and the second control unit 311 are implemented in processing circuitry, which is an electronic circuit that performs applicable processing tasks.

This processing circuitry may be a dedicated hardware element or a control circuit including a memory and a central processing unit (CPU) that executes a program stored in the memory. In this regard, examples of the memory include a non-volatile or volatile semiconductor memory such as a random access memory (RAM), a read-only memory (ROM), and a flash memory; a magnetic disk; an optical disk, and the like. FIG. 4 is a diagram illustrating the control circuit according to the first embodiment. In a case in which the processing circuitry is a control circuit including a CPU, this control circuit is, for example, a control circuit 10 having a configuration illustrated in FIG. 4.

As illustrated in FIG. 4, the control circuit 10 includes a processor 10a, which is a CPU, and a memory 10b. In the case of implementation in the control circuit 10 illustrated in FIG. 4, implementation is provided by the processor 10a by reading and executing a program corresponding to each processing task, stored in the memory 10b. In addition, the memory 10b is also used as a temporary memory in each processing task performed by the processor 10a.

Widespread use of smartphones and tablet terminal devices has caused explosive growth in traffic by cellular wireless communication. This presents a concern about radio resource shortage. To improve frequency use efficiency in view of radio resource shortage, consideration is being given to use of a small cell as the cell served by the base station 102 for further spatial division.

As far as the cell configuration of a conventional base station is concerned, a cell served by an eNB has a relatively wide coverage, and when multiple cells are formed, the cells are formed to cover a particular area. Use of small cell architecture leads to a cell served by an eNB to have a coverage smaller than the coverage of a cell not served by an eNB. Thus, to cover a particular area by cells served by an eNB, a large number of eNBs using small cell architecture are needed.

The following description refers to a cell having a relatively large coverage, such as a cell served by a conventional eNB, as a macrocell, and an eNB that serves a macrocell, as a macro eNB. In addition, the following description refers to a cell having a relatively small coverage, such as a cell in small cell architecture, as a small cell, and an eNB that serves a small cell, as a small eNB.

NR provides three services. A first one of the services is Ultra-Reliability Low Latency Communication (URLLC), which seeks low latency and high reliability. A second one of the services is enhanced Mobile Broadband (eMBB), which seeks high speed, high capacity communication. A third one of the services is massive Machine Type Communication (mMTC), which enables connectivity to a super-high capacity terminal. These three services are expected to use a frequency of 6 GHz or higher to provide broadband communication. However, such a high frequency has characteristics of a higher attenuation ratio in air and less occurrence of diffraction than those at frequencies of 6 GHz and lower used in LTE services. This requires installation of a large number of the base stations 102 each having a small coverage to ensure an adequate coverage such as one provided in LTE.

Installation of a large number of the base stations 102 each having a small coverage will cause frequent handover in the mobile terminal 101. In addition, due to less occurrence of diffraction at a frequency of 6 GHz or higher, the mobile terminal 101 that has entered an environment where a building or an obstacle provides shielding will undergo communication disconnection, meaning a disruption of connection with the base station 102. Occurrence of such communication disconnection presents a problem in that the mobile terminal 101 in communication will be subjected to temporary interruption of data communication, and thereby the base station 102 and the mobile terminal 101 cannot communicate with each other. The description of the first embodiment discloses a technique for solving such problem.

3GPP proposes splitting of a base station into two units. The two units are respectively designated CU and DU. In addition, multiple DUs may be connected to a CU. Several options are proposed for sharing functions between a CU and a DU. For example, Option 2 is proposed such that a CU includes PDCP, while a DU includes RLC, MAC, and PHY. Moreover, Option 3 is proposed such that a CU includes PDCP and high RLC (H-RLC), while a DU includes low RLC (L-RLC), MAC, and PHY. Option 3 includes Option 3-1. Option 3-1 is proposed such that L-RLC has functions for segmentation of an RLC protocol data unit (PDU), while H-RLC in Option 3 has a function of transmission acknowledgement and other RLC functions.

In NR, the DC or MC technology is proposed to be applied to communication that uses multiple DUs . Use of multiple DUs can reduce or prevent occurrence of communication disconnection between the mobile terminal 101 and the base station 102 even in an environment where a building or an obstacle provides shielding. For example, when the mobile terminal 101 is connected with multiple DUs, data communication can continue even upon occurrence of communication disconnection with one of the DUs, by maintaining connection with DUs other than the DU that has undergone communication disconnection. In addition, transmission of the same data from multiple DUs to provide communication redundancy enables data communication to continue without retransmission even when disconnection occurs on connection with one or multiple DUs. This can ensure low latency. However, transmission of the same data from multiple DUs to provide communication redundancy may cause radio resource shortage. Accordingly, the present embodiment introduces a mechanism to reduce retransmission of redundant data to reduce or prevent radio resource shortage.

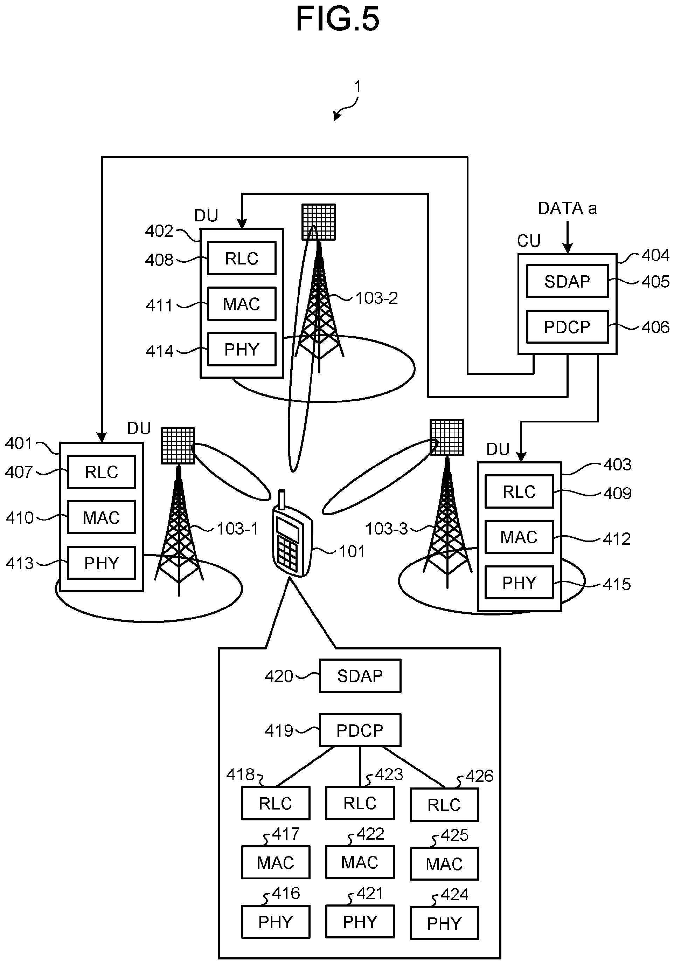

FIG. 5 is a diagram illustrating a communication environment in which the base station according to the first embodiment is split into two units. For example, assume that the mobile terminal 101 is in an environment illustrated in FIG. 5. The mobile terminal 101 is connected to the multiple eNBs 103 each functioning as a DU in the multi-connectivity technology. The multiple DUs are each connected to a CU 404. A CU is also referred to as upper-layer base station. A DU is also referred to as lower-layer base station. Hereinafter, the DU included in the eNB 103-1 will be referred to as DU 401. The DU included in the eNB 103-2 will be referred to as DU 402. The DU included in the eNB 103-3 will be referred to as DU 403. The DU 401, the DU 402, and the DU 403 each communicate with the mobile terminal 101. The DU 401, the DU 402, and the DU 403 are connected to the CU 404. The CU 404 controls transmission and reception of data of the DU 401, the DU 402, and the DU 403. In addition, the CU 404 duplicates data to be transmitted to the mobile terminal 101, and transmits the data to the DU 401, the DU 402, and the DU 403. The DU 401, the DU 402, and the DU 403 each transmit the data duplicated by the CU 404 to the mobile terminal 101.

The DU 401 includes a link control unit 407, an access control unit 410, and a physical control unit 413. The link control unit 407 performs processing of RLC. The access control unit 410 performs processing of MAC. The physical control unit 413 performs processing of PHY. Hereinafter, the link control unit 407 will also be referred to as RLC 407. The physical control unit 413 will also be referred to as PHY 413. The access control unit 410 will also be referred to as MAC 410. The DU 402 includes a link control unit 408, an access control unit 411, and a physical control unit 414. The link control unit 408 performs processing of RLC. The access control unit 411 performs processing of MAC. The physical control unit 414 performs processing of PHY. Hereinafter, the link control unit 408 will also be referred to as RLC 408. The physical control unit 414 will also be referred to as PHY 414. The access control unit 411 will also be referred to as MAC 411. The DU 403 includes a link control unit 409, an access control unit 412, and a physical control unit 415. The link control unit 409 performs processing of RLC. The access control unit 412 performs processing of MAC. The physical control unit 415 performs processing of PHY. Hereinafter, the link control unit 409 will also be referred to as RLC 409. The physical control unit 415 will also be referred to as PHY 415. The access control unit 412 will also be referred to as MAC 412.

The CU 404 includes a first upper-layer control unit 405 and a second upper-layer control unit 406. The first upper-layer control unit 405 performs processing of a service data adaptation protocol (SDAP) layer. The SDAP layer will be referred to simply as SDAP. The second upper-layer control unit 406 performs processing of PDCP. The first upper-layer control unit 405 will also be referred to as SDAP 405. The second upper-layer control unit 406 will also be referred to as PDCP 406. The mobile terminal 101 includes an upper-layer control unit 420, a data control unit 419, multiple link control units 418, 423, and 426, multiple access control units 417, 422, and 425, and multiple physical control units 416, 421, and 424. The data control unit 419 performs processing of PDCP. The multiple link control units 418, 423, and 426 perform processing of RLC. The multiple access control units 417, 422, and 425 perform processing of MAC. The multiple physical control units 416, 421, and 424 perform processing of PHY. The upper-layer control unit 420 will also be referred to as SDAP 420. The data control unit 419 will also be referred to as PDCP 419. The multiple link control units 418, 423, and 426 will also be referred to respectively as RLCs 418, 423, and 426. The multiple access control units 417, 422, and 425 will also be referred to respectively as MACs 417, 422, and 425. The multiple physical control units 416, 421, and 424 will also be referred to respectively as PHYs 416, 421, and 424. SDAP is a protocol for encapsulating an internet protocol (IP) packet, specified in a 3GPP NR standard. The data control units, the link control units, the access control units, and the physical control units are implemented in the processing circuitry illustrated in FIG. 4.

Data addressed to the mobile terminal 101 input to the SDAP 405 is duplicated in the PDCP 406 into multiple packets, which are then transferred from the CU 404 respectively to the DU 401, the DU 402, and the DU 403. The DU 401 performs segmentation of an RLC PDU contained in the packet into RLC service data units (SDUs) by the RLC 407, and transfers the RLC SDUs to the MAC 410. The MAC 410 determines a resource usable for transmission, and performs scheduling. The PHY 413 converts the RLC SDUs into a signal at a radio frequency, and transmits the data to the mobile terminal 101. The DU 401 performs similar data transmission processing also for the DU 402 and for the DU 403. The DU 402 and the DU 403 also perform data transmission processing similar to the data transmission processing performed in the DU 401. The RLC SDU(s) are also referred to as first data, and an RLC PDU is also referred to as second data.

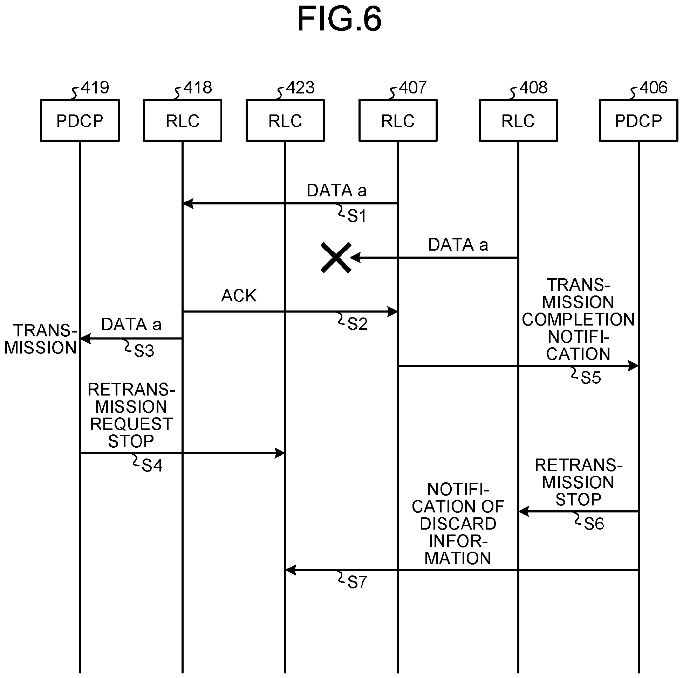

FIG. 6 is a sequence diagram illustrating a flow of data in the wireless communication system 1 according to the first embodiment. Data "a" of initial transmission transmitted from the RLC 407 of the eNB 103 is received by the RLC 418 of the mobile terminal 101 (step S1). The base station including the RLC 407 is also referred to as first base station. The RLC 407 generates an RLC PDU using the RLC SDU(s). The data "a" is one or more RLC SDUs. Data containing one or multiple RLC SDUs and header information together form an RLC PDU. Upon successful generation of an RLC PDU and passing of cyclic redundancy checksum (CRC) check, the RLC 418 of the mobile terminal 101 transmits an acknowledgement (ACK) reporting a successful reception to the RLC 407 of the eNB 103 (step S2). In addition, the RLC 418 transfers the data "a" to the PDCP 419 in an upper layer (step S3). After recognition of arrival of the data "a" earlier from the RLC 418, the PDCP 419 transmits a message for stopping a retransmission request to the RLC 423, to which the data "a" has not yet been transmitted (step S4). In other words, upon reception of the data "a" from any one of the multiple DUs, the PDCP 419 transmits a retransmission request stop message, which stops a request for retransmission of the data "a", to the RLC 423, which has not yet received the data "a". The RLC 423 is also referred to as first link control unit.

In addition, the RLC 407 of the eNB 103 transmits a message of transmission completion notification to the PDCP 406 (step S5). The message of transmission completion notification is a message for reporting that the RLC 407 has completed transmission of the RLC PDU to the RLC 418. Upon reception of the transmission completion notification, the PDCP 406 transmits a retransmission stop message to the RLC 408 of the DU 402, which has not yet received the data "a", that is, which has not yet transmitted a transmission completion notification message (step S6). The base station including the RLC 408 is also referred to as second base station. In addition, the PDCP 406 of the CU 404 transmits, using a control message, discard information indicating that the data "a" has been discarded, to the RLC 423 (step S7). The discard information contains the sequence number(s) of the RLC SDU(s) (hereinafter represented simply as RLC SDUs) or the RLC PDU retransmission of which has been stopped. The RLC 423 is capable of stopping a retransmission request based on the discard information. In addition, the retransmission stop message includes a message for stopping transmission of the RLC PDU, including transferring to MAC. Alternatively, the retransmission stop message includes a message for stopping transmission of the RLC SDUs segmented in the RLC 408 to the mobile terminal 101, or stopping transferring of the RLC SDUs to the MAC 411.

In a case in which a retransmission request stop message was transmitted to the RLC 423, but a discard information notification, which is a control message, has not been received by the RLC 423, the RLC 423 stops the retransmission request for the applicable RLC SDUs or RLC PDU according to the retransmission request stop message. In a case in which a discard information notification, which is a control message, was transmitted from the PDCP 406, and was received by the RLC 423 of the mobile terminal 101, but a retransmission request stop message from the PDCP 419 to the RLC 423 has not been received, the RLC 423 requests data retransmission from the RLC 408 ignoring the discard information notification. In a case in which the RLC 423 has received a retransmission request stop message, but the data "a" has been transmitted from the RLC 408, the RLC 423 receives the data "a", generates an RLC PDU using the RLC SDUs, and transfers the data "a" to the PDCP 419.

In a case in which a retransmission stop message was transmitted from the PDCP 406 to the RLC 408, and the RLC 408 has received a retransmission request from the RLC 423 during discarding processing of the RLC PDU or the RLC SDUs retransmission of which is to be stopped, the RLC 408 does not retransmit the RLC SDUs or the RLC PDU retransmission of which is to be stopped.

As described above, the present embodiment prevents retransmission by the eNB 103 of data that would arrive later at the mobile terminal 101, of the data in the packets duplicated in the PDCP 406, thereby reducing or preventing consumption of radio resources between one or multiple ones of the eNBs 103 and the mobile terminal 101. Thus, a high speed, high reliability, low latency communication system can be provided.

### Second Embodiment.

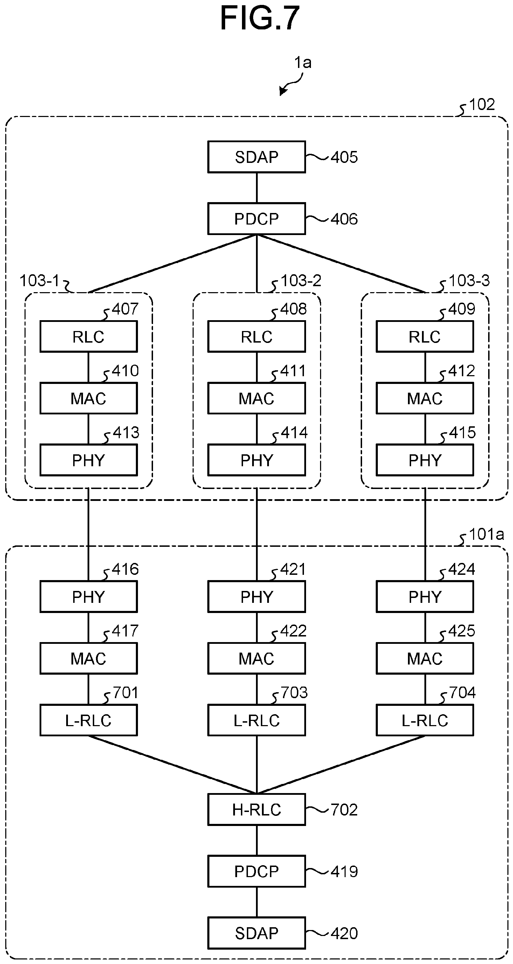

FIG. 7 is a diagram illustrating a wireless communication system according to a second embodiment. In FIG. 7, RLC is segmented into H-RLC and L-RLC. A mobile terminal 101a includes an upper-layer link control unit 702 and lower-layer link control units 701, 703, and 704. The upper-layer link control unit 702 performs processing of H-RLC. The lower-layer link control units 701, 703, and 704 perform processing of L-RLC. The upper-layer link control unit 702 will also be referred to as H-RLC 702. The lower-layer link control units 701, 703, and 704 will also be referred to respectively as L-RLCs 701, 703, and 704.

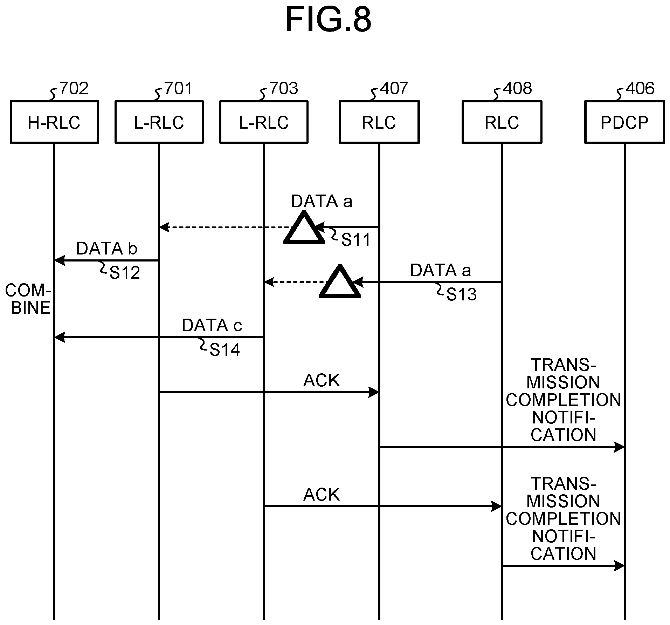

FIG. 8 is a sequence diagram illustrating a flow of data in a wireless communication system 1a according to the second embodiment. The data "a" transmitted from the RLC 407 is segmented into one or multiple RLC SDUs, and then transmitted (step S11). Let data "b" denote one or multiple RLC SDUs that are lost or corrupted during transmission from the eNB 103 to the mobile terminal 101.

The L-RLC 701 transmits the data "b" to the H-RLC 702 without concatenating the RLC SDUs into an RLC PDU (step S12). Similarly, the data "a" transmitted from the RLC 408 is segmented into one or multiple RLC SDUs, and then transmitted to the L-RLC 703 (step S13). Let data "c" denote one or multiple RLC SDUs that are lost or corrupted during transmission from the eNB 103 to the mobile terminal 101. The L-RLC 703 transfers this data "c" to the H-RLC 702 without concatenating the RLC SDUs to an RLC PDU (step S14) .

The L-RLC 701 and the L-RLC 703 transmit an ACK respectively to the RLC 407 and the RLC 408, and the RLC 407 and the RLC 408 then each transmit a transmission completion notification to the PCDP 406. Having received data from the L-RLC 701 and from the L-RLC 703, the H-RLC 702 combines the data "b" and the data "c". That is, an RLC PDU is generated from RLC SDUs transmitted from multiple L-RLCs. In addition, the H-RLC 702 combines RLC SDUs having the same sequence number, and thus generates RLC SDUs that are unavailable in one data, from the other data. The PDCP 406 has a feature of specifying the size of segmentation of an RLC PDU into RLC SDUs, to the RLC 407 and to the RLC 408, to cause equivalent or identical RLC SDUs to be generated in two or more RLCs.

As described above, the present embodiment prevents retransmission by the eNB 103 of data that would arrive later at the mobile terminal 101a, of the data in the packets duplicated in the PDCP 406 also when RLC is segmented into H-RLC and L-RLC, thereby making radio resources available between one or multiple ones of the eNBs 103 and the mobile terminal 101a. Thus, a high speed, high reliability, low latency communication system can be provided.

The configurations described in the foregoing embodiments are merely examples of various aspects of the present invention. These configurations may be combined with a known other technology, and moreover, a part of such configurations may be omitted and/or modified without departing from the spirit of the present invention.

### Reference Signs List

1, 1a wireless communication system; 10 control circuit; 10a processor; 10b memory; 101, 101a mobile terminal; 102 base station; 103, 103-1 to 103-3 eNB; 105, 105-1, 105-2 control station; 201 first protocol processing unit; 202 application unit; 203 first transmission data buffering unit; 204 encoder unit; 205 modulation unit; 206 frequency conversion unit; 207 antenna; 208 demodulation unit; 209 decoder unit; 210 first control unit; 301 first communication unit; 302 second communication unit; 303 second protocol processing unit; 304 second transmission data buffering unit; 311 second control unit; 401, 402, 403 lower-layer base station (DU); 404 upper-layer base station (CU); 405, 420 SDAP; 406, 419 PDCP; 407, 408, 409, 418, 423, 426 RLC; 410, 411, 412, 417, 422, 425 MAC; 413, 414, 415, 416, 421, 424 PHY; 701, 703, 704 L-RLC; 702 H-RLC.

## Claims

1. A wireless communication system comprising: a mobile terminal; a plurality of lower-layer base stations to communicate with the mobile terminal; and an upper-layer base station to control the plurality of lower-layer base stations, the upper-layer base station transmitting, to the plurality of lower-layer base stations, a plurality of pieces of first data generated by duplication by the upper-layer base station, the plurality of lower-layer base stations transmitting the respective pieces of first data to the mobile terminal, wherein
the mobile terminal includes
a plurality of link control units to receive the respective pieces of first data correspondingly to the respective lower-layer base stations, and
a data control unit to, when a first link control unit of the plurality of link control units receives the first data from a first lower-layer base station of the plurality of lower-layer base stations, transmit a retransmission request stop message to a second link control unit that does not receive the first data from a second lower-layer base station being a lower-layer base station other than the first lower-layer base station, the retransmission request stop message being a message that causes stopping of a request for retransmission of the first data.

2. The wireless communication system according to claim 1, wherein
upon reception, from the first link control unit, of information indicating reception of the first data, the first lower-layer base station transmits, to the upper-layer base station, a notification indicating completion of transmission of the first data, and
the upper-layer base station receives the notification from the first lower-layer base station, and transmits, to the second lower-layer base station, a retransmission stop message that causes stopping of retransmission of the first data.

3. The wireless communication system according to claim 2, wherein
the upper-layer base station causes the second lower-layer base station to discard the first data, and transmits, to the first link control unit, discard information indicating that the first data is discarded.

4. The wireless communication system according to claim 3, wherein
the discard information contains a sequence number of the first data or of second data, the second data being data containing one or more pieces of the first data and header information, and
the upper-layer base station stops retransmission of the data using the sequence number.

5. The wireless communication system according to claim 4, wherein
the lower-layer base station includes an access control unit to transmit and receive the first data, and
the retransmission stop message has a function to prevent transferring of the first data or of the second data to the access control unit.

6. The wireless communication system according to claim 4 or 5, wherein
after reception of the retransmission request stop message, in a case in which the data is received, the second link control unit generates the second data using the first data, and transmits the second data to the data control unit.

7. The wireless communication system according to any one of claims 4 to 6, wherein
the second lower-layer base station does not retransmit, to the mobile terminal, the first data or the second data retransmission of which is to be stopped in a case in which a message that requests retransmission of the first data is received from the mobile terminal.

8. The wireless communication system according to claim 6, wherein
the plurality of link control units are split into one upper-layer link control unit and a plurality of lower-layer link control units, and
the plurality of lower-layer link control units do not generate the second data using the first data, but transmit the first data to the upper-layer link control unit.

9. The wireless communication system according to claim 8, wherein
the upper-layer link control unit generates the second data using the first data transmitted by the plurality of lower-layer link control units.

10. The wireless communication system according to claim 9, wherein
the upper-layer link control unit combines the pieces of first data having a same sequence number, transmitted by the plurality of lower-layer link control units.

11. The wireless communication system according to any one of claims 8 to 10, wherein
the upper-layer base station specifies a size of segmentation of the second data into the first data, to the plurality of lower-layer base stations.
